Europäisches Patentamt

European Patent Office

Office européen des brevets

(11) Publication number: **0 142 224**
**A1**

## (12) EUROPEAN PATENT APPLICATION

(21) Application number: **84305649.0**

(22) Date of filing: **20.08.84**

(51) Int. Cl.⁴: **B 60 B 7/04**
**F 16 L 58/18**

(30) Priority: **25.08.83 US 526570**

(43) Date of publication of application:
**22.05.85 Bulletin 85/21**

(84) Designated Contracting States:
**DE FR GB IT SE**

(71) Applicant: **ALLEGHENY LUDLUM STEEL CORPORATION**
**Oliver Building 2000 Oliver Plaza**
**Pittsburgh Pennsylvania 15222(US)**

(72) Inventor: **Bushnell, William Samuel**
**21526 Corsaut Lane**
**Birmingham Michigan 48010(US)**

(74) Representative: **Sheader, Brian N. et al,**
**ERIC POTTER & CLARKSON 27 South Street**
**Reading Berkshire, RG1 4QU(GB)**

(54) Method of producing stainless steel assemblies and articles thereby (1111111).

(57) An assembled steel article, and particularly a spoke and ferrule assembly, is provided having a first part, such as a spoke, (4) made of stainless steel and a second part, such as a ferrule, (6) made of a bimetallic material having a stainless steel outer surface (10) and an aluminum inner surface (12). The assembly requires the first part (4) being in at least partial contact with the aluminum inner surface (12) of the second part (6) at or near the formed crevice (8) to form an assembly which is substantially free of the formation of iron oxide corrosion products in the crevice (8).

A method of assembly is also provided.

EP 0 142 224 A1

# METHOD OF PRODUCING STAINLESS STEEL
## ASSEMBLIES AND ARTICLES THEREBY

This invention relates to a method of producing an assembly of stainless steel parts wherein one part is a bimetal of stainless steel and aluminum. More particularly, this invention relates to a spoke and ferrule assembly, such as for automotive wheel covers, and for providing an assembly that substantially eliminates the formation of iron oxides in crevices formed in the assembly.

There are numerous applications of assembled metal articles having a plurality of metal parts which are assembled and held together by fasteners or force-fit arrangements. The end use environments in which some of the assemblies will be used may result in varying degrees of corrosion problems and particularly in crevices of the assembly which are susceptible to corrosion. Crevice corrosion problems may exist particularly in stainless steel assemblies at the crevices formed between the contact of stainless steel parts. Ways of avoiding crevice corrosion problems generally include eliminating the crevice or improving the crevice corrosion resistance of the steel parts of the assembly.

For example, in spoke and ferrule designs such as are used in automotive wheel covers, a crevice is formed when the spoke and ferrule are assembled. During the service life of the wheel cover, automotive spoke wheel covers are subjected to severe crevice corrosion at the crevice. Particularly, the crevice corrosion takes the form of an objectionable iron oxide formation (red rust) that bleeds from the crevice between the spoke and ferrule.

Prior attempts of others to solve this red rust problem have been unsuccessful. Even though the spoke and ferrule assemblies are stainless steel and typically automotive wheel covers may be of Type 301, there is a crevice corrosion problem in the service life of the covers. Changing the alloy to one having improved crevice corrosion resistance properties, such as Type 444 alloy having about 18% chromium and 2% molybdenum, has shown not to be effective. Further alloy changes, such as with increased chromium and molybdenum contents, may solve the problem, but would make automotive wheel covers prohibitively expensive. Furthermore, the use of sealers, such as thermoplastic resins, between the ferrule and spoke has not been effective to eliminate the crevice corrosion or to eliminate the red rust bleed. Others have attempted to coat or paint the ends of the spoke with either aluminum or zinc-rich paint. Still others have attempted to cover the end of the spokes with a solder composition, such as containing primarily a lead or tin composition. Such latter methods of coating, painting or covering the ends of the spokes have been ineffective, not cost effective and impractical production methods. During assembly, the coating or covering may scrape off and expose the underlying stainless steel alloy. Additionally, such methods are unacceptable because they add a process step to the assembly procedure which increases the cost of production.

Still others have attempted to modify the spoke and ferrule design from an assembly to a unitary piece. It has been proposed to form and enlarge one end of the spoke to give the appearance of a ferrule. Such an approach eliminates the crevice, but is not nearly as aesthetically pleasing.

What is needed is a method of producing stainless steel assemblies such as automotive wheel cover spoke and ferrule assemblies to eliminate the red rust bleed at the crevice in order to pass crevice corrosion tests and more particularly throughout the service life of the article. It is desirable to maintain the aesthetically pleasing design of the spoke and ferrule design without the red rust. It is further desirable to provide an acceptable crevice corrosion-resistant system for such articles.

More particularly, an objective is to make a rust-free stainless steel assembly, particularly a spoke and ferrule assembly.

In accordance with the present invention, an assembled steel article having surfaces of two or more parts in crevice-forming contact is provided wherein the article comprises a first part made of stainless steel, a second part made of a bimetal material having a stainless steel outer surface and an aluminum inner surface and the first part being in at least partial contact with the aluminum inner surface of the second part at or near the formed crevice. The assembly is substantially free of the formation of iron oxide corrosion products that occur in the crevice.

More particularly, an automotive wheel cover having a spoke and ferrule design is provided comprising a stainless steel spoke, a bimetallic ferrule having a stainless steel outer surface and an aluminum inner surface, the ferrule being adapted to receive the spoke therein in an opening defined by the stainless steel outer surface. The spoke is in at least partial contact with the aluminum inner surface of the ferrule.

A method is also provided for producing spoke and ferrule assemblies comprising the steps of making spokes of stainless steel, providing a bimetallic material having a stainless steel surface and an aluminum surface. The bimetallic material is formed into a ferrule having the entire outer surface stainless steel and an aluminum inner surface wherein a portion of the stainless steel outer surface defines an opening therein for receiving the spoke. The method includes introducing the spoke into the ferrule opening to form an assembly wherein the spoke is in at least partial contact with the inner aluminum surface of the ferrule to make an assembly that substantially eliminates the formation of iron oxide corrosion products and bleeding thereof from a spoke-ferrule crevice.

An advantage of the present invention is that it is a practical solution to a commercial problem and is inexpensive to implement. The present invention requires no new tooling in order to make the spoke and ferrule assemblies, and can be used in current production methods. A further advantage is that it maintains an aesthetically pleasing spoke and ferrule design.

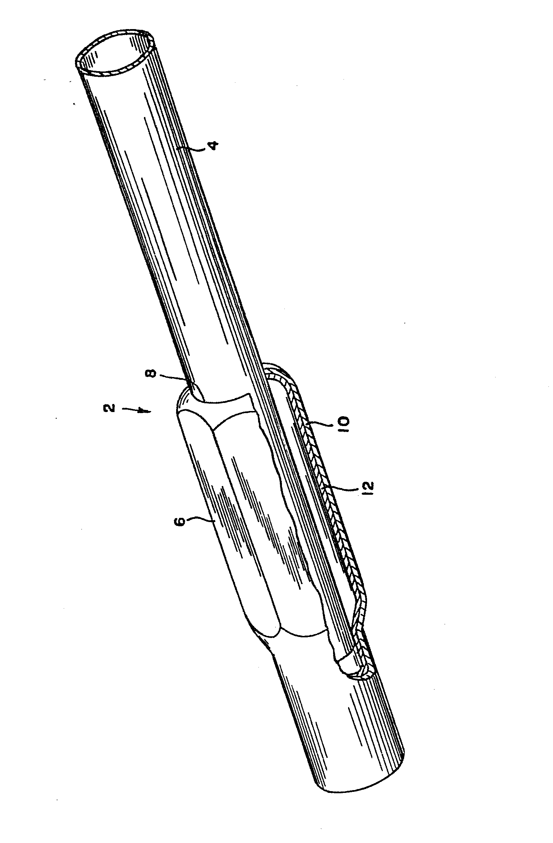

The invention will be more particularly described with reference to the accompanying drawings, the single Figure of which is an illustration of a spoke and ferrule assembly in partial cross section according to one embodiment of the present invention.

Generally, the present invention relates to a method of assembly and an assembly of stainless steel parts wherein one part is a bimetal of stainless steel and aluminum. One embodiment of the present invention is a spoke and ferrule assembly, such as for automotive wheel covers. Such a typical spoke and ferrule assembly 2 is illustrated in the Figure comprising a spoke 4 in contact with and received in ferrule 6 and forming a crevice 8 therebetween. The first part, spoke 4, of the assembly may be made of any metallic alloy, such as stainless steel. Typically, the spoke may be made of Type 439 alloy, however, other generally corrosion-resistant alloys are also suitable.

The second part, ferrule 6, may take any of various different shapes and forms, of which one typical shape is shown in the Figure. Conventionally, ferrule 6 may be made of any alloy, typically a stainless steel such as Type 434, and may be made of the same alloy as the first part, spoke 4. Also conventionally, ferrule 6 includes an opening for receiving a spoke 4 therein in at least one end of the ferrule. Typically, the assembly is a force-fit assembly wherein there is a close tolerance fit between spoke 4 and ferrule 6.

An important feature of the present invention is that ferrule 6 is made of a bimetallic material having as its outside surface an alloy which meets the aesthetically pleasing criteria. Typically, the outside layer or surface 10 of ferrule 6 will be a corrosion-resistant alloy, as a stainless steel, and typically be of a different alloy to spoke 4. The bimetallic material also consists of a layer 12 of another alloy, such as aluminum or magnesium or other alloys which meet the design criteria and form at least a portion of the inner surface of ferrule 6. In the assembly, the important feature is that spoke 4 is in at least partial contact with a portion of the inner surface 12, preferably an aluminum alloy layer. The inner layer 12 of metal in contact with the outer surface of spoke 4 when assembled inside the ferrule 6 may or will oxidize, but any oxidation products will not be red, but should be whitish or grayish in colour. Typically, the contact may be at the inner surfaces of the opening of ferrule 6 where the crevice is formed or inside the ferrule 6 such as by the lower end of spoke 4, or both, as shown in the Figure. Such products of oxidation may bleed at the crevice 8 in the assembly, but the products of oxidation will not affect the aesthetic appearance of the spoke and ferrule assembly. Furthermore, the assembly eliminates the red rust bleed by eliminating the corrosion of the iron and the steel at the crevice and thus eliminates any iron oxide corrosion products. The inner layer 12 of the bimetallic ferrule 6 may be made of any number of alloy combinations. Practical commercial considerations require that it does not adversely affect the formability of a ferrule from a bimetallic material and does not significantly increase the cost of production.

In a more preferred embodiment, the entire corrosion-resistant outer surface of ferrule 6 is composed of the stainless steel, for example, and substantially all of the inner surface 12 is the second or inner layer of the bimetallic material. Furthermore, it is preferred that the outer stainless steel layer of the bimetallic material comprise 40 to 60% of the entire bimetallic material thickness.

In a preferred embodiment, a method of producing a spoke and ferrule assembly would include making or providing stainless steel spokes and providing a bimetallic material having a stainless steel surface and an aluminum surface. The method includes forming the bimetallic material into a ferrule 6 having the entire outer surface 10 stainless steel and an aluminum inner surface 12 such that a portion of the stainless steel outer surface defines an opening therein for receiving the stainless steel spoke 4. The method includes introducing the spoke into the ferrule opening to form an assembly wherein the spoke 4 is in at least partial contact with the inner aluminum surface 12 of the ferrule 6. The assembly 2 has a crevice 8 which is and will be substantially free of bleeding iron oxide corrosion products (red rust).

Claims

1. An assembled steel article (2) having surfaces of two or more parts in crevice-forming contact, <u>characterised in that</u> the article (2) comprises: a first part (4) made of stainless steel; a second part (6) made of a bimetallic material having a stainless steel outer surface (10) and an aluminum inner surface (12); the first part (4) being in at least partial contact with the aluminum inner surface (12) of the second part (6) at or near the formed crevice (8); and said assembly (2) being substantially free of the formation of iron oxide corrosion products in the crevice.

2. An article according to claim 1, <u>characterised in that</u> the first part is a spoke (4) and the second part is a ferrule (6).

3. An article according to claim 2, <u>characterised in that</u> the bimetallic ferrule (6) is formed having the entire outer surface (10) stainless steel with an aluminum inner surface (12).

4. An article according to claim 1, 2 or 3, <u>characterised in that</u> the thickness of the bimetallic material is 40-60% stainless steel and the remainder being aluminum.

5. An automotive wheel cover having a spoke and ferrule design, <u>characterised in</u> comprising: a stainless steel spoke (4); a bimetallic ferrule (6) having a stainless steel outer surface (10) and an aluminum inner surface (12), the ferrule (6) being adapted to receive the spoke (4) therein in an opening defined by the stainless steel outer surface (10); and the spoke (4) being in at least partial contact with the aluminum inner surface (12) of the ferrule (6).

6. A method of producing spoke and ferrule assemblies, <u>characterised in</u> comprising: providing spokes (4) of stainless steel; providing a bimetallic material having a stainless steel surface (10) and an aluminum surface (12); forming the bimetallic material into a ferrule (6) having the entire outer surface (10) stainless steel and an aluminum inner surface (12), a portion of the stainless steel outer surface (10) defining an opening therein for receiving the spoke (4); and introducing the spoke (4) into the ferrule opening to form an assembly wherein the spoke (4) is in at least partial contact with the inner aluminum surface (12) of the ferrule (6) to make an assembly that substantially eliminates the formation of iron oxide corrosion products and bleeding thereof from a spoke-ferrule crevice (8).

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-1 320 841 (SOCIETE DES TUBES DE MAUBEUGE) * whole document * | 1 | B 60 B 7/04<br>F 16 L 58/18 |
| Y | | 2-6 | |
| Y | US-A-3 174 803 (MULHERN) * column 2, lines 32-72; column 3, lines 1-15; figures * | 2-6 | |
| A | US-A-1 705 197 (MILLS) | | |
| A | FR-A-2 139 086 (CONTINENTAL OIL CO.) | | |
| A | US-A-4 286 824 (BROWN) | | |
| A | US-A-4 221 436 (MARSHALL) | | |
| A | US-A-3 843 201 (BUERGER) | | |

TECHNICAL FIELDS SEARCHED (Int. Cl.4)

B 60 B
F 16 L

The present search report has been drawn up for all claims

| Place of search THE HAGUE | Date of completion of the search 26-11-1984 | Examiner PEETERS L. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82